# EUROPÄISCHE PATENTSCHRIFT

(11) **EP 1 392 480 B1**
(45) Veröffentlichungstag und Bekanntmachung des Hinweises auf die Patenterteilung: **07.01.2009**
(21) Anmeldenummer: 02747170.5
(22) Anmeldetag: 17.05.2002
(51) Int. Cl.: B27D 1/08, B32B 21/14, B29C 63/00

(54) **VERFAHREN ZUR HERSTELLUNG EINES DREIDIMENSIONAL VEFORMTEN KÖRPERS**
METHOD FOR PRODUCING A THREE-DIMENSIONALLY FORMED BODY
PROCEDE DE FABRICATION D'UN CORPS TRIDIMENSIONNEL A FORME CONFEREE PAR DEFORMATION

(30) Priorität: 17.05.2001 DE 10124912
(43) Veröffentlichungstag der Anmeldung: 03.03.2004
(73) Patentinhaber: MÖLLER, Achim, 01157 Dresden (DE)
(72) Erfinder: MÖLLER, Achim, 01157 Dresden (DE)
(74) Vertreter: Kailuweit, Frank
(86) Internationale Anmeldenummer: PCT/DE2002/001891
(87) Internationale Veröffentlichungsnummer: WO 2002/092300

(56) Entgegenhaltungen:
- DD-A- 271 670
- DE-A- 3 308 843
- DE-U- 29 908 123
- GB-A- 493 145

## Beschreibung

Die Erfindung betrifft ein Verfahren zur Herstellung eines dreidimensional geformten, schalenförmigen Körpers (3D-Körpers) oder zur Beschichtung eines dreidimensional geformten Bauelementes mit dreidimensional biegeverformbaren Flächenelementen (3D-Flächenelementen) oder mit konventionellen biegeverformbaren Flächenelementen (2D-Flächenelementen) aus Holz oder Holzverbundwerkstoff sowie eine Vorrichtung zur Realisierung des Verfahrens (Anspruch 10).

Die Herstellung von 3D-Körpern sowie dazu besonders geeigneter 3D-Flächen-elemente wird in DD 271 670 B5 beschrieben.

Danach werden mehrere, übereinander angeordnete 3D-Flächenelemente mittels schubverformungsfähiger, elastischer Matten aneinandergedrückt und als Paket 3D-verformt. Diese Matten sollen im Verbund mit den 3D-Flächenelementen deren Stabilisierung bewirken.

Nachteilig an diesem Verfahren sind die relativ geringe Stützwirkung der elastischen Matten gegenüber Knickkräften, die hohen erforderlichen Kräfte zu deren Schub-verformung sowie der hohe Aufwand bei der Handhabung der Matten durch Anlegen von Vakuum oder Aussendruck. Somit bleibt die Anwendungsbreite dieser Technik begrenzt. Das 3D-Verformen von Flächenelementen nach DD 271 670 B5 stößt zudem auf geometrisch bedingte Verformungsgrenzen, wenn der Umformgrad die Biegung der streifenförmigen Strukturelemente in der Fläche über deren Bruchverformungsgrenze hinaus erfordert. So ist es z.B. nicht möglich, eine halbkugelförmige Schale herzustellen.

Ferner wird in EP 0 265 632 B1 ein Verfahren zum Herstellen eines Furnierwerkstückes beschrieben, welches plattenförmig ausgebildet und mit einem Deckfurnier beschichtet ist und dessen Randzonen umlaufend mit einem gerundeten Profil pressverformt werden. An Konturrundungen ist somit im Randbereich eine 3D-Verformung erforderlich. Das hierfür verwendete Pressstanzwerkzeug erlaubt allerdings nur eine maximale Werkstückdicke von 5 mm. Es können gemäß EP 0 265 632 B1 kleine Risse im 3D-Bereich entstehen, die durch hohen Pressdruck wieder geschlossen werden. Dieses Verfahren ist für im Wesentlichen ebenflächige Teile und nicht zur Herstellung von schalenförmigen 3D-Körpern geeignet.

Bekannt ist das Furnieren von überwiegend ebenflächigen Bauteilen, die nur in den Eckbereichen nur verhalten (schwach) 3D-geformte Rand- oder auch Mittelzonen aufweisen. Diese Bauteile werden mittels bekannter Membranpresstechnik, wie z. B. in EP 0 568 935 beschrieben, beschichtet. Dabei ist der Umformgrad eng auf flächenhafte Bauteile mit relativ geringer Profilierung begrenzt.

DE 196 07 051 C2 beschreibt ein Furnierbeschichtungsverfahren für steife Trägerteile wie Aluminium-Druckgussteile, wobei das Furnier zunächst auf eine stabilisierende Haut aufgeklebt und danach auf das Trägerteil mit ebenflächig-abgewinkelter Grundform und umlaufend gerundetem Rand aufgepresst wird. Das Aufpressen insbesondere in diesem Randbereich wird nicht beschrieben. Aufgabe der Erfindung ist die Rationalisierung der Fertigbearbeitung. Zum Furnieren von Körpern mit ausgeprägter 3D-Form ist dieses Verfahren nicht geeignet.

In DE 197 53 243 C2 ist ein Verfahren zum Furnierbeschichten eines drei-dimensional geformten Gegenstandes beschrieben, bei dem von vornherein das Entstehen von Rissen im Furnier eingeräumt wird, deren Ausbreitung jedoch durch eine zusätzliche Kunstharzbeschichtung vermindert werden soll.

Aufgabe der Erfindung ist die Schaffung eines Verfahrens zur Herstellung eines ausgeprägt dreidimensional geformten, dünnwandigen, schalenförmigen Körpers (3D-Körpers) oder zur Beschichtung von ausgeprägt dreidimensional geformten Bauelementen aus unterschiedlichsten Werkstoffen, wie z. B. Holz, Holzwerkstoff, Kunststoff, Aluminiumguss, etc. sowie von Vorrichtungen zur Realisierung des Verfahrens. Dabei soll durch das Verfahren die bei allen Anwendungsvarianten bestehende Gefahr des Stabilitätsversagens (Ausknicken, Faltenwerfen und in Folge unkontrolliertes Stauchen und/oder Zerreißen) der 2D- oder 3D-Flächenelemente während des Umformvorgangs sicher unterbunden werden.

Die Aufgabe wird gelöst durch die Merkmale des Hauptanspruchs 1. Vorteilhafte Ausgestaltungen der Erfindung sind in den Unteransprüchen dargelegt.

Die Herstellung eines ausgeprägt dreidimensional geformten, dünnwandigen, schalenförmigen Körpers (3D-Körpers) oder die Beschichtung von ausgeprägt drei-dimensional geformten Bauelementen mittels einzelner oder mehrerer, schichtförmig angeordneter 3D-Flächenelemente oder mit 2D-Flächenelementen mit verbesserter Forrnungsfähigkeit, wie z. B. Furniere aus gestauchtem Holz, erfolgt in mehreren Schritten.

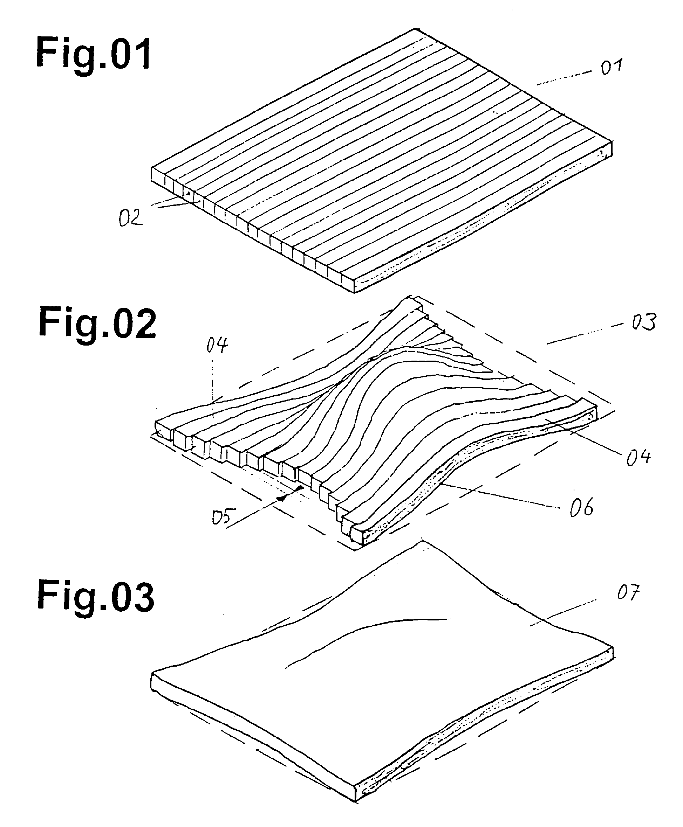

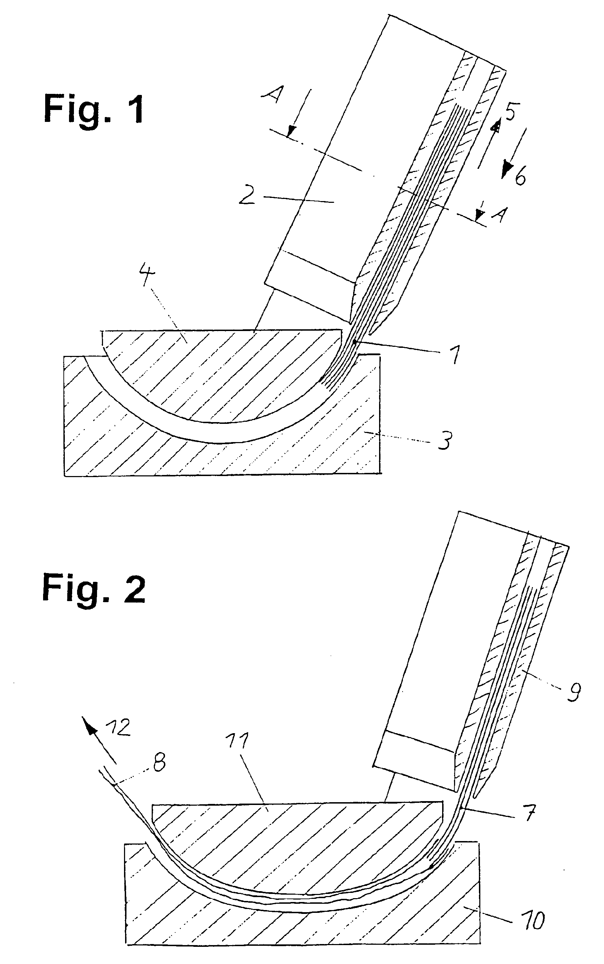

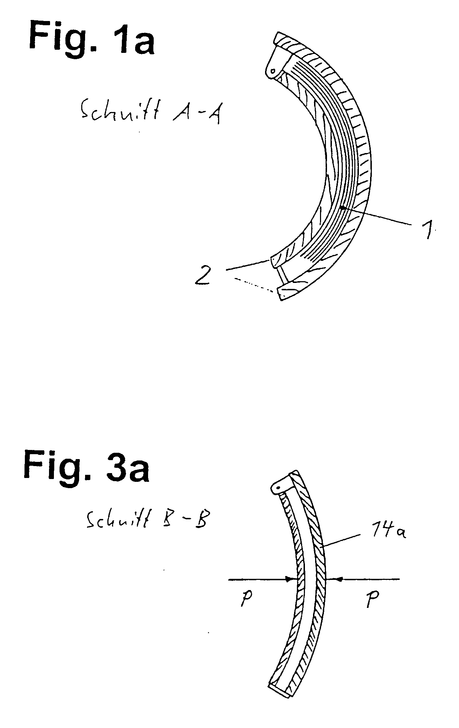

Zunächst werden die umzuformenden 2D- oder 3D-Flächenelemente auf das Verarbeitungsmaß zugeschnittenen (Fig. 01).

Bei mehrlagigen Umformteilen werden die umzuformenden 2D- oder 3D-Flächenelemente für den Umformprozess zu einem Paket positioniert und ggf. temporär in ihrer Lage fixiert. Ein einzelnes 3D-Flächenelement besteht dabei jeweils aus Holz (Holzfurnier), geschichtetem Holz (Lagenholz) oder einem Verbund aus Holz und einem oder mehreren weiteren Flächenmaterialien wie Plastfolie oder einem Vlies.

Nachfolgend werden die ein- oder mehrlagig angeordneten Flächenelemente abschnittsweise oder im Ganzen umgeformt, wobei die Formänderung durch eine Schubverformung in der Fläche aller beteiligten Flächenelemente und einer gleichzeitigen mehrachsigen Biegeverformung der Flächenelemente im Bereich der aktiven Umformzone erzeugt wird.

Das Wirkprinzip der 3D-Umformung ist grafisch anhand der Figuren 01 ... 03 dargestellt. Die Figuren zeigen die 3D-Umformung eines einzelnen 3D-Flächenelementes (01) gemäß DD 271 670 B5, wobei die einzelnen Streifen (02) des 3D-Flächenelementes zugunsten der besseren Erkennbarkeit der Schubverformung vergrößert dargestellt sind.

Bei der Umformung dieses 3D-Flächenelementes, das aus aneinandergrenzenden, untereinander mittels einer Heftung fixierten Streifen besteht (Fig. 01, Fig. 02), tritt keine nennenswerte Dickenveränderung der 3D-Flächenelemente und damit des Presspaketes bzw. eines einzelnen 3D-Flächenelementes ein.

Die Kontur des 3D-Flächenelementes ändert sich durch die entlang der benachbarten Streifen wirkende Verschiebung.

Dehnungen und Stauchungen der 3D-Flächenelemente sind demgegenüber sehr gering.

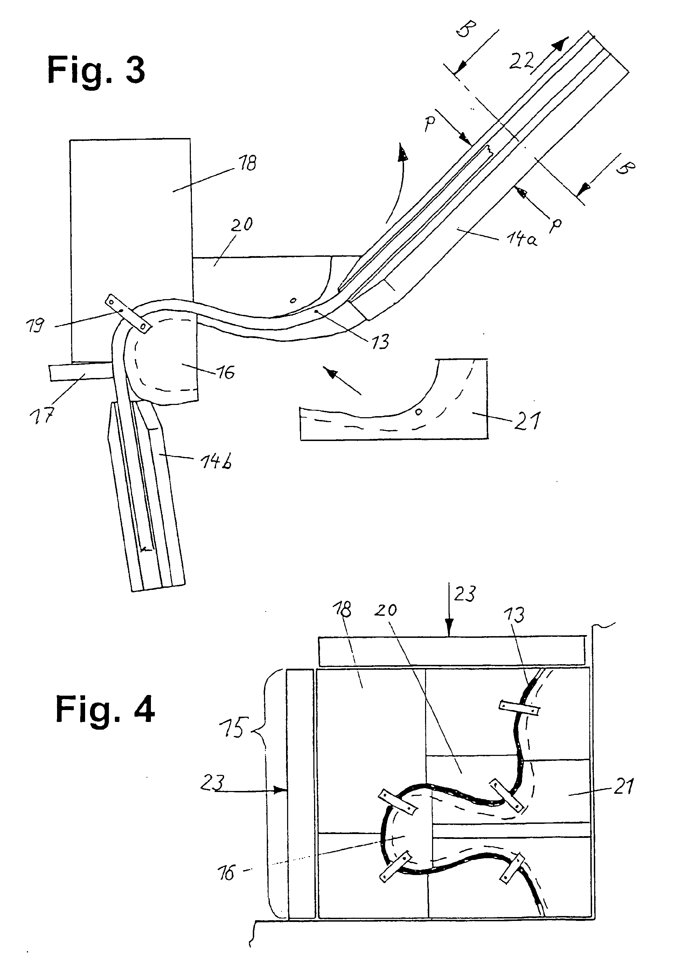

Neben den vorgenannten Werkstoffen können auch andere, weniger schub-verformbare Werkstücke aus Holz, geschichtetem Holz oder einem Verbund aus Holz und weiteren Materialien als Flächenelemente verarbeitet werden, wenn deren Formungsmöglichkeiten dem zu realisierenden Umformgrad entspricht. Bei den weniger schubverformbaren Werkstoffen ergibt sich während der 3D-Umformung ein höherer Anteil Dehnung und Stauchung (Figur 03).

Um ein Ausbauchen, Knicken oder Falten des Flächenelementes in der Umformzone auszuschließen, wird in diesem Bereich eine Gegenspannung erzeugt, die eine Verformung des Flächenelementes durch die verfahrensnotwendige Verschiebung innerhalb der ein- oder mehrschichtigen 2D- oder 3D-Flächenelemente ermöglicht. Zum anderen verhindert die Gegenspannung ein Stabilitätsversagen der umzuformenden 2D- oder 3D-Flächenelemente während des Umformprozesses.

Die Gegenspannung ist so eingestellt, dass ein ungehindertes Verschieben der aneinandergrenzenden Streifen des Flächenelementes bei der Schubumformung ermöglicht wird, ohne dass die auftretenden Reaktionsspannungen in der Umformzone des Flächenelements die Stabilität des Umformteils gefährden.

Nach Erreichen des gewünschten Umformgrades werden die (in der Regel nur elastisch) verformten Flächenelemente so lange mit Druck beaufschlagt, bis ein zuvor aufgebrachter Klebstoff die Flächenelemente miteinander oder mit dem sie tragenden Bauelement verbindet.

Nach der Umformung und Verklebung der Flächenelemente erfolgt optional eine Finishbearbeitung, um den äußeren Randzonen des Umformteils die endgültige Form zu verleihen.

In einer besonders bevorzugten Verfahrensvariante erfolgt die Umformung des Flächenelementes bei Temperaturen zwischen 20 °C und 30 °C. Nach Aufbringung eines Pressdruckes von 2,1 MPa werden die Flächenelemente auf eine Temperatur von 90 °C gebracht, wobei der Klebstoff aushärtet.

In einer gleichfalls bevorzugten Verfahrensvariante werden die umzuformenden Flächenelemente vor der Umformung auf eine Temperatur von 80 °C gebracht, wodurch während der anschließenden Umformung neben der elastischen ein höherer Anteil an plastischer Verformung der Flächenelemente und damit ein kleinerer Biegeradius möglich wird. Gleichfalls wird dadurch eine ggf. verwendete, thermisch reversierbare Heftung der Streifen des Flächenelementes gelockert.

Eine Vorrichtung zur Realisierung der verfahrensspezifischen Gegenspannungen ist als kanalartige Zwangsführung (Kanal) ausgebildet.

In einer bevorzugten Ausbildung besteht der Kanal aus einem ebenflächigen oder bogenförmigen, starren Plattenpaar, das die Flächenelemente im Wesentlichen umschließt und einen solchen Spalt bildet, dass die Flächenelemente unter Einwirkung der Umformspannungen darin verschoben werden können, ohne jedoch auszuknicken oder sich übereinander zuschieben.

Nach der in der Regel elastischen, 2D-Vorformung der Flächenelemente in der kanalartigen Zwangsführung wird das Umformteil einem Formwerkzeug zugeführt, in dem die endgültige Formgebung und Fixierung erfolgt.

Das Formwerkzeug zum Verpressen der Flächenelemente (Presspaket) ist so eingestellt, dass die Pressflächen von Gesenk und Stempel zumindest zeitweise einen ebensolchen Kanal bilden.

Das Plattenpaar der Zwangsführung, dessen Rand an einer Seite die gleiche Bogenform aufweist wie der Rand des Formwerkzeuges, wird mit diesem Rand tangential an das Formwerkzeug geführt, und das Presspaket vom Plattenpaar in das kanalartig eingestellte Formwerkzeug geschoben.

Das Einschieben des Presspaketes kann nach folgenden Varianten geschehen:
1. Schub durch ein angesetztes, stößelartiges Element
2. Zug durch ein am Presspaket befestigtes, flexibles Element
3. Verwendung eines Hilfs-Flächenelementes zum tablettartigen Einschieben oder Einziehen
4. Einblasen mittels gerichtetem Luftpolster
5. Rhythmische Relativbewegung zwischen Plattenpaar und Formwerkzeug in der Art eines Schwingförderers

An der Übergangsstelle zwischen Plattenpaar der kanalartigen Zwangsführung und Formwerkzeug, wie nachfolgend in Ausführungsbeispiel 1 beschrieben, liegen die 3D-Flächenelemente um die Länge eines Rückhubes bzw. Vorwärtsschubes des Plattenpaares zeitweise frei, wobei die Länge dieser Strecke noch keine Knickgefahr für das Presspaket darstellt.

Nach dem Einschieben des Presspaketes in das Formwerkzeug erfolgt das Verpressen und Aushärten des zwischen den 3D-Flächenelementen befindlichen Klebstoffes zu einem Formteil.

Diese Art des Formwerkzeuges ist besonders für die Herstellung gefäßartiger Formteile, jedoch auch für Profile begrenzter Länge geeignet, und nachfolgend beispielhaft in den Ausführungsbeispielen 1 und 2 näher beschrieben.

Anstelle des im Ganzen spaltförmig geschlossenen Formwerkzeuges kann dieses auch segmentweise geschlossen werden. Dabei wird das Presspaket zunächst in einem Plattenpaar geführt, dessen Austrittsrand dem sich verändernden Profil des Formwerkzeuges im Mittel entspricht. Nachdem ein kurzes Stück des Presspaketes aus dem Plattenpaar herausgezogen wurde, wird dieser freiliegende, erste Bereich an den Beginn des offenen Formwerkzeuges angelegt und mit dem für diesen ersten Bereich passenden, kleinen Segment des Gegen-Presswerkzeuges belegt. Beim Aufdrücken des Segmentes findet die erste 3D-Schubverformung in diesem Bereich statt. Das Plattenpaar wird nun um die Länge des nächsten Segmentes tangential zum offenen, konvexen Formwerkzeugbereich bewegt, wodurch der nächste Bereich des Presspaketes freigelegt wird. Während dieser tangentialen Bewegung erhält der jeweils freiliegende Teil des Presspaketes durch eine kontrollierte Plattenpaar-Klemmung eine stabilisierende Zugspannung und wird dabei bereits teilweise 3D-verformt.

Die dabei ablaufende Schubverformung des Presspaketes setzt sich bis in den im Kanal befindlichen Bereich fort. Anschließend wird wieder das entsprechende, nun konkave Segment des Gegen-Presswerkzeuges aufgedrückt und die 3D-Verformung in diesem Bereich vervollkommnet. Beim Aufdrücken des Gegen-Presswerkzeuges wird in diesem Bereich durch die Presswerkzeugflächen ein Kanal gebildet, der mit abnehmender Spaltdicke und damit steigendem 3D-Umformgrad eine zunehmende Stabilisierungswirkung auf das Presspaket ausübt.

Auf diese Weise wird das gesamte Presspaket jeweils zuerst um einen konvexen Bereich des Formwerkzeuges gelegt, wobei die Krümmungsrichtung wechseln kann, und jeweils anschließend das konkave Gegenstück aufgesetzt, bis das gesamte Formwerkzeug schrittweise geschlossen ist.

Die Segmente werden in einer einfachen Ausgestaltung jeweils durch eine Verriegelung fixiert. Sie sind in ihrer Länge so bemessen, dass bei ihrem Aufdrücken die 3D-Verformung in einem genügend begrenzten Flächenbereich ohne Gefahr des Stabilitätsversagens der 3D-Flächenelemente stattfindet.

Das endgültige Verpressen der 3D-Flächenelemente erfolgt durch Aufbringen eines Pressdruckes auf die Press-Segmente über die Wirkung der Verriegelung hinausgehend, bis der Klebstoff zwischen den 3D-Flächenelementen ausgehärtet ist.

Diese Verfahrensvariante eignet sich besonders für die Herstellung komplizierter profilartiger Teile mit Hinterschneidungen und gegenläufigen Winkeländerungen und ist in Ausführungsbeispiel 2 näher beschrieben.

Zur Überwindung der geometrisch bedingten Verformungsgrenzen von 3D-Flächenelementen, wie sie z.B. bei der Herstellung eines gefäßartigen Formteils mit senkrecht verlaufenden Wänden auftreten, wird eine spezifische Vorformung vorgenommen.

Zumindest in Bereichen, in denen die 3D-Flächenelemente während der Verformung in Flächenrichtung einer zu starken Krümmung unterworfen werden, wird jeweils ein 3D-Flächenelement verwendet, welches eine der zu erwartenden Krümmungsrichtung der einzelnen Streifen in der Fläche entgegengesetzte Krümmung aufweist. Während der 3D-Verformung wird diese entgegengesetzte Krümmung vermindert, aufgehoben oder im Extremfall in der Gegenrichtung bis zum Erreichen der Bruchverformungsgrenze aufgebaut. Solche vorgeformten 3D-Flächenelemente können je nach Lage der extremen Verformung aus mehreren Teilen zu einer geschlossenen Fläche zusammengesetzt oder auch mit einfachen 3D-Flächen-elementen kombiniert werden.

Zur Herstellung solcher vorgeformter Elemente eignen sich verschiedene Verfahren:
1. Die Vorformung erfolgt durch Biegen der Streifen in der ebenen Fläche zu konzentrischen Kreisbögen oder ähnlichen Kurven und anschließendes Fixieren, wobei sich die Streifen nicht seitlich voneinander entfernen. Das Fixieren kann durch reversierbaren Klebstoff zwischen den Streifen, durch Aufkleben von Fäden oder flächigen Klebeelementen, durch plastifizierendes Befeuchten und/oder Erwärmen und anschließendes Trocknen und/oder Abkühlen oder durch einfaches mechanisches Einspannen in einer Haltevorrichtung erfolgen. Um das Zusammenfügen derart vorgeformter Flächenelemente untereinander oder das Anfügen an andere, aus geraden Streifen bestehende, geradkantige Flächenelemente zu ermöglichen, folgt ein Geradschnitt der gebogenen und zu fügenden Kante des vorgeformten Flächenelementes.
2. Es ist jedoch auch möglich, in Umkehrung der Reihenfolge der beschriebenen Arbeitsgänge das noch nicht in der Ebene vorgeformte, dreidimensional biegeverformbare Flächenelement an der zu fügenden Kante bogenförmig zu beschneiden und anschließend wie beschrieben vorzuformen, bis die bogenförmige Kante gerade ist. Die weitere Verarbeitung erfolgt wie oben beschrieben.
3. Anstatt der Vorformung der Streifen in der Ebene können die zu fügenden Flächenelemente, deren Kanten nach Bedarf bogenförmig beschnitten sind, quer zu dieser Ebene so gebogen werden, so dass die bogenförmige Kante mit der Kante eines gleichartig vorbereiteten Teils deckungsgleich ist. Die Fügekanten werden zusammengeheftet. Das so entstandene räumliche Gebilde wird anschließend in die Ebene gedrückt, wodurch sich die Streifen der Flächenelemente bogenförmig anordnen.
4. Anstatt des Einebnens des aus gebogenen Flächenelementen zusammen-gesetzten räumlichen Gebildes nach Pkt. 3 ist es jedoch auch möglich, sofort die dreidimensionale Verformung zur Herstellung eines Formteils oder einer Beschichtung anzuschließen. Dabei erfolgt die Umformung des aus 2D-Flächen zusammengesetzten räumlichen Gebildes in ein dreidimensional geformtes Flächenelement durch in allen Flächenbereichen unkritische Verformen der Streifen. Der besondere Vorteil dieser Variante ist die Herstellbarkeit von extrem geformten Elementen, die aus einer ebenen Fläche heraus nicht mehr realisierbar sind.

Nach einer vorteilhaften Variante werden die Streifen selbst senkrecht zur Fläche gesehen ballig ausgebildet bzw. zu deren Enden hin verjüngt, so dass sie in der Reihung zum Rand des Flächenelementes hin immer stärker gekrümmt sind.

Die Weiterverarbeitung der vorgeformten 3D-Flächenelemente zu 3D-Formteilen oder einer entsprechenden Beschichtung erfolgt wahlweise nach den beschriebenen Verfahren und ist exemplarisch im Ausführungsbeispiel 6 näher erläutert.

Die Beschichtung von dreidimensional geformten Bauteilen aus verschiedenen Werkstoffen mit 3D-Flächenelementen (3D-Fumierbeschichtung) erfolgt erfindungsgemäß aus einem Kanal heraus, in dem das 3D-Flächenelement sicher gegen Stabilitätsversagen geführt wird. Ein aus dem Kanal herausragender, kurzer Bereich des 3D-Flächenelementes wird tangential auf den Rand des Bauteils aufgelegt und mit einem der Form des Bauteils angepasstem Druckelement angedrückt. Der Kanal wird tangential weitergeführt und das 3D-Flächenelement dabei fortschreitend auf das Bauteil abgelegt, während das Druckelement der Kanaldüse dicht folgt und das 3D-Flächenelement fortschreitend auf das Bauteil aufpresst. Ein zuvor auf das Bauteil oder das 3D-Flächenelement aufgebrachter Klebstoff fixiert beide Komponenten, es ist alternativ möglich, den Klebstoff auf eine zwischen Bauteil und 3D-Flächenelement zu bringende Hilfsträgerschicht aufzutragen. Die 3D-Schub-verformung findet in dem gesamten, jeweils noch nicht aufgeklebten Bereich des 3D-Flächenelementes, der sich größtenteils im Kanal befindet, statt. Der Abstand zwischen Kanaldüse (Mundstück) und Druckelement ist so bemessen, dass das in diesem Bereich freiliegende 3D-Flächenelement kein Stabilitätsversagen erleidet und sich dennoch dem ggf. wechselnden Profil des Bauelementes anpasst.

Die Druckelemente sind alternativ ausgebildet als:
1. Walzen, die ggf. durch Schrägstellung ein Zusammenziehen der Streifen des 3D-Flächenelementes bewirken
2. Hintereinander angeordnete Druckschuhe, welche im Wechsel in Fortschrittsrichtung gleiten oder feststehen und sich so insgesamt vorwärts bewegen
3. Luftpolster-Druckschuh

Daneben ist die konventionelle Druckbeaufschlagung von Hand möglich. Diese Beschichtungsvariante ist besonders für die so genannte Kantenbeschichtung von Möbelbauteilen oder auch die schrittweise Beschichtung von beliebigen Flächen geeignet und in den Ausführungsbeispielen 7 und 8 illustriert.

Nach einer vorteilhaften Variante, die speziell zur 3D-Beschichtung von im Wesentlichen ebenflächigen oder wenig gekrümmten, plattenartigen Bauteilen mit umlaufendem, profilierten Rand entwickelt wurde, besteht der stabilisierende Kanal aus einem zu öffnenden Rahmen. Dieser Rahmen liegt etwa tangential zum Bauteil und umschließt den profilierten Rand. Das 3D-Flächenelement wird in diesen Rahmen eingespannt und quer zur Bauteilfläche über das Bauteil gestülpt, wobei es aus dem kanalartigen Rahmen ohne Stabilitätsversagen heraus gleitet, dabei wird es im ebenen Flächenbereich sowie im jeweils vom Rahmen freigelegten Profil-Flächenbereich durch ein Druckelement, vorzugsweise eine an sich bekannte druck- oder vakuumbeaufschlagte Membran, gehalten. Insbesondere in den Eckbereichen des Rahmens findet eine 3D-Schubverformung statt.

Nach Abschluss dieser Formung wird durch die Wirkung des Druckelementes und eine Heizvorrichtung die Verklebung des 3D-Flächenelementes mit dem zuvor beleimten Bauteil vorgenommen (vgl. Ausführungsbeispiel 11).

Die Erfindung wird nachfolgend anhand ausgewählter Ausführungsbeispiele näher erläutert und in den zugehörigen Zeichnungen illustriert.

Es zeigen:
- Fig.01:: Den prinzipiellen Aufbau eines aus nebeneinander angeordneten Streifen gebildeten 3D-Flächenelementes
- Fig.02 :: Das Flächenelement nach Fig. 01 nach der 3D-Umformung
- Fig.03:: Ein Flächenelement aus weniger schubverformungsfähigem Material nach der 3D-Umformung
- Fig. 1:: Eine Anordnung zur Herstellung eines behälterförmigen Formteils aus 3D-Flächenelementen
- Fig. 1a:: Einen waagerechten Schnitt durch den Kanal 2 der Anordnung gemäß Fig. 1
- Fig. 2:: Eine Anordnung zur Herstellung eines 3D-Formteils für Verkleidungs-elemente
- Fig. 3:: Eine Anordnung zur schrittweisen Herstellung eines komplizierten 3D-Formteils
- Fig. 3a:: Einen waagerechten Schnitt durch den geteilten Kanal 14a; 14b der Anordnung gemäß Fig. 3
- Fig. 4:: Die Anordnung gemäß Fig.3 im vollständig geschlossenen Zustand

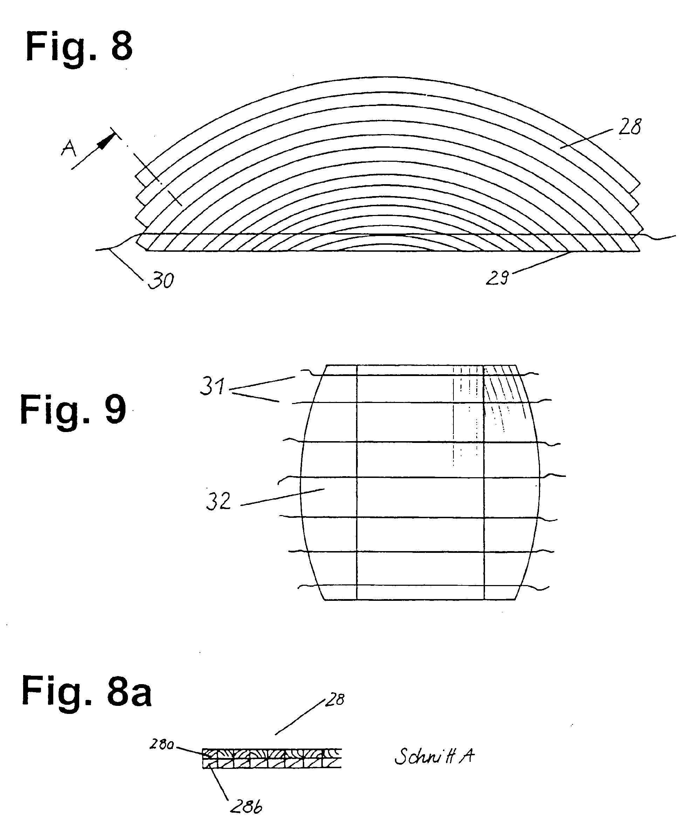

- Fig. 8:: Ein flächig vorgeformtes 3D-Flächenelement
- Fig. 8a:: Ein zweilagiges Streifen-3D-Flächenelement

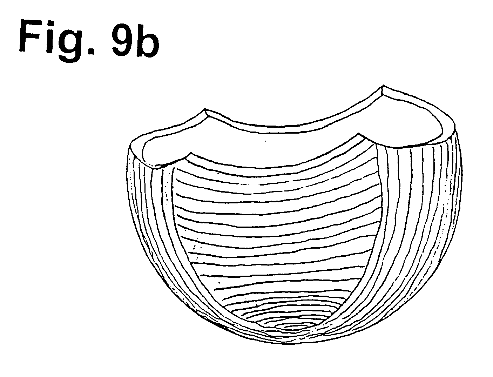

- Fig. 9:: Ein flächig vorgeformtes, zusammengesetztes 3D-Flächenelement
- Fig. 9b:: Ein stark gekrümmtes Behältnis, gefertigt unter Verwendung eines flächig vorgeformten, zusammengesetzten 3D-Flächenelementes nach Fig. 9

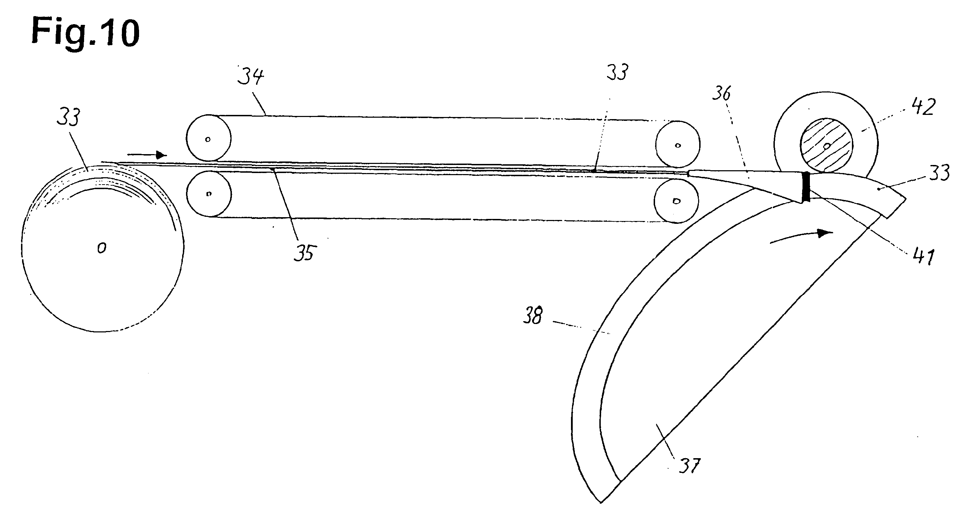

- Fig. 10:: Eine Anordnung zur 3D-Furnierkantenbeschichtung

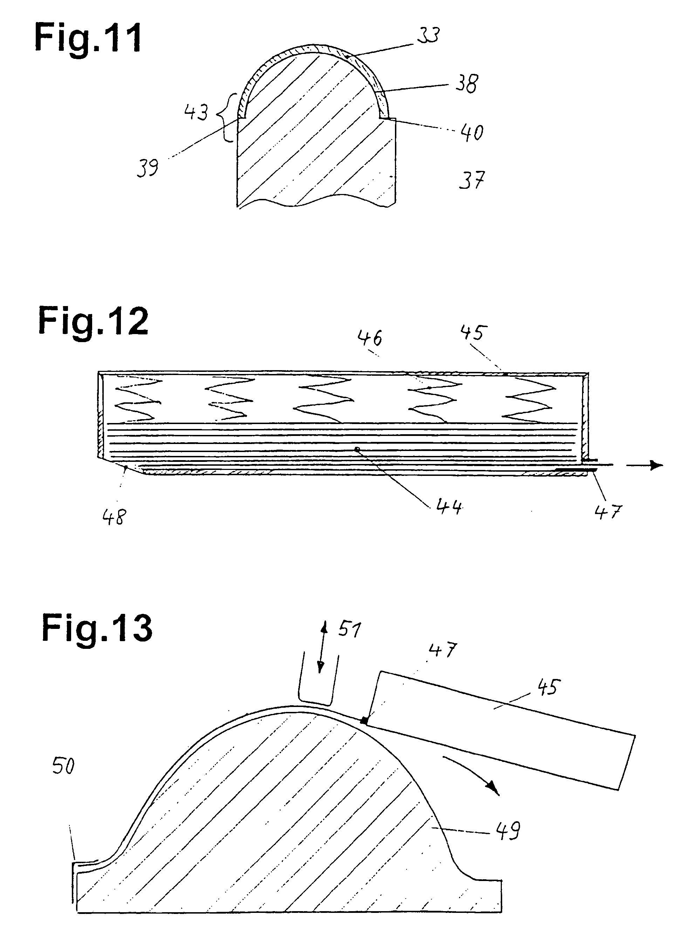

- Fig. 11:: Ein Randprofil mit 3D-Furnierkantenbeschichtung
- Fig. 12:: Ein Magazin mit 3D-Flächenelementen
- Fig. 13:: Eine Anordnung zur Herstellung eines Prototypen-3D-Formteils

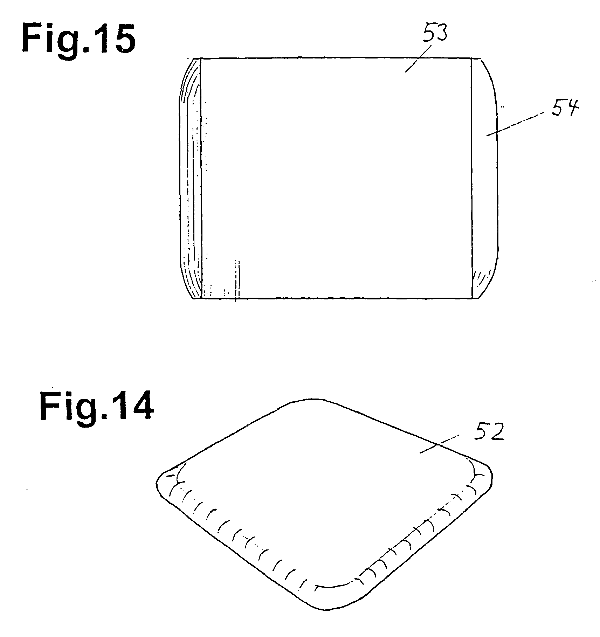

- Fig. 14:: Ein Möbel-Türenrohling
- Fig. 15: Ein 3D-Flächenelement für einen Türenrohling

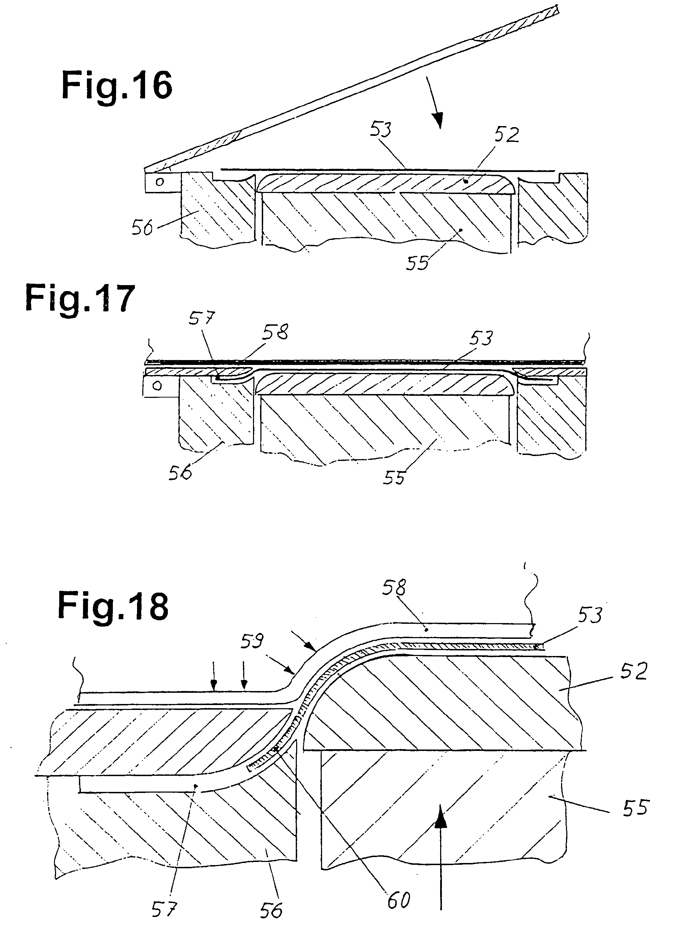

- Fig. 16:: Eine Membranpresse mit 3D-Formungseinrichtung
- Fig. 17:: Eine Formungseinrichtung gemäß Fig. 16 in geschlossenem Zustand
- Fig. 18:: Ein Detail der Formungseinrichtung während des Formungsvorganges

In den Figuren 01 und 02 ist der prinzipielle Aufbau eines streifenförmigen 3D-Flächenelementes vor und nach der 3D-Umformung dargestellt:

Ein ausgangs ebenflächiges 3D-Flächenelement (01) mit rechteckiger Kontur, bestehend aus Streifen (02) mit quadratischem Querschnitt (vergrößert dargestellt), wird zu einem gewölbten 3D-Körper (03) mit in einer Ebene liegenden Randbereichen (04) umgeformt. Dabei verschieben sich die Streifen (02) gegenseitig in Längsrichtung so, dass ihre Verschiebungen (05) dem jeweiligen Umfangsbereich der Wölbung des 3D-Körpers entsprechen, ohne dabei ihre seitlichen Abstände zueinander zu vergrößern und bilden damit eine gegenüber dem ebenflächigen 3D-Flächenelement veränderte, nicht mehr rechteckige Kontur (06).

Alternativ zu dem aus Streifen bestehenden 3D-Flächenelement (01) kann auch ein nicht in Streifen unterteiltes 2D-Flächenelement (07) verwendet werden, welches vergleichsweise wenig schubverformbar und damit geringfügig 3D-verformbar, jedoch für den speziellen Zweck ausreichend ist (Fig. 03).

### Ausführungsbeispiel 1 (Fig. 1):

Fünf aus Streifen bestehende 3D-Flächenelemente aus Erlen-Furnier mit einem Format von 400 mm x 400 mm und einer Dicke von 1,2 mm sind bezüglich der Holzfaserrichtung jeweils kreuzweise übereinander gelegt. Die Kontaktflächen wurden zuvor mit einem in der Furniertechnik üblichen Harnstoff-Formaldehydharzleim (UF-Leim) beschichtet. Das so gebildete, ca. 6,5 mm dicke Presspaket (1) wird in einen Kanal (2) gebracht, der aus zwei starren, mit einem Radius von ca. 250 mm zylindrisch gebogenen Platten besteht, die einen Spalt von 7 mm bilden. Das Einbringen des Presspaketes erfolgt nach dem Aufklappen des Plattenpaares durch Einlegen, beim Zuklappen und Verriegeln der Platten nimmt das Paket die zylindrische Form des Kanals an.

Ein kugelabschnittförmiges Formwerkzeug, bestehend aus Gesenk (3) und entsprechend geformtem Stempel (4) mit einem mittleren Kugelradius von 250 mm ist so eingestellt, dass zwischen Gesenk und Stempel ein Spalt von 7 mm verbleibt. Der Kanal wird nun mit seinem bogenförmigen Rand an den Rand des Formwerkzeuges angelegt, so dass sich der Spalt des Kanals und der des Formwerkzeuges decken.

Danach wird das Presspaket vom Kanal aus ca. 15 mm weit in den Spalt des Formwerkzeuges geschoben. Das weitere Einschieben geschieht durch die Abfolge:
1. Spannen des Presspaket-Randes im Formwerkzeug durch Absenken des Stempels mit mäßiger Kraft
2. Zurückziehen des Kanals um 15 mm vom Formwerkzeugrand und damit Vorgleiten des Presspaketes im Kanal um diesem Betrag (5)
3. Spannen des Presspaketes im Kanal durch Annähern der Platten mit mäßiger Kraft, gleichzeitig Lösen der Spannung des Formwerkzeuges
4. Vorschieben des Kanals bis zum Formwerkzeugrand und damit Einschieben des Presspaketes in das Formwerkzeug um weitere 15 mm (6)
5. Spannen des Presspaketes im Formwerkzeug und gleichzeitig Lösen der Spannung des Kanals

Diese Schritte werden etwa im Sekundentakt so oft wiederholt, bis das Presspaket vollständig in das Presswerkzeug gelangt ist. Das Presspaket wird in den 7 mm breiten Spalten zwangsgeführt, wodurch die Schubverformung der 3D-Flächen-elemente durch Kraftumlenkungen erreicht und ein Stabilitätsversagen unterbunden wird. Die zeitweilige maximale freie Einspannlänge des Presspaketes von 15 mm ist klein genug, um ein Ausknicken der 3D-Flächenelemente zu verhindern.

Das Presswerkzeug weist eine Arbeitstemperatur von 105°C auf. Nach Abschluss des Einschiebens des Presspaketes wird der Stempel mit einer Presskraft von 250 kN gegen das Gesenk gedrückt, bis der verwendete Klebstoff nach 8 Minuten ausgehärtet ist und der fertige Formteilrohling nach Öffnen des Formwerkzeuges entnommen werden kann. Das Formteil wird nach dem Beschneiden und Verputzen als Behälter verwendet.

### Ausführungsbeispiel 2 (Fig. 2):

Drei Streifen-3D-Flächenelemente aus Buchen-Furnier mit einem Format von 500 mm x 300 mm und einer Dicke von 1,2 mm sind bezüglich der Holzfaserrichtung jeweils kreuzweise zu einem Presspaket (7) übereinander gelegt, wobei die Decklagen-Holzfaserrichtung parallel zur 500 mm langen Kante verläuft. Die Kontaktflächen wurden zuvor mit einem in der Furniertechnik üblichen UF-Leim beschichtet, und ein kurzzeitiges, ebenflächiges Pressen unter geringem Druck sorgt für die allseitige Benetzung der 3D-Flächenelemente mit Leim. An einem 300 mm langen Rand des Presspaketes ist ober- und unterseitig eine dünne, zugfeste, locker gewebte und 400 mm lange Baumwollgewebebahn (8) mittels eines PVA-Klebstoffes angeklebt.
Das so gebildete, ca. 4 mm dicke Presspaket wird in einen Kanal (9) gebracht, der aus zwei starren, mit einem elliptischen Profil zylindrisch gebogenen Platten besteht, die einen Spalt von 4,5 mm bilden. Das Einbringen des Presspaketes erfolgt nach dem Aufklappen des Plattenpaares durch Einlegen. Beim Zuklappen und Verriegeln der Platten nimmt das Paket die zylindrische Form des Kanals an. Die Gewebebahn liegt im Wesentlichen außerhalb des Kanals.

Die Gewebebahn wird nun in ein ellipsoidförmiges Pressgesenk (10) so eingelegt, so dass der anschließende Kanal mit seinem elliptischen Profil mit dem elliptischen Rand des Gesenkes übereinstimmt und dass das Ende dieser Bahn am gegenüberliegenden Gesenkrand hervorsteht. Daraufhin wird der Pressstempel (11) in das Gesenk eingebracht, so dass ein Spalt von 4,5 mm verbleibt. Nun wird auf das Ende der Gewebebahn eine Zugkraft (12) so aufgebracht, dass das Presspaket in den Spalt des Formwerkzeuges eingezogen wird und sich dabei der Schubverformung des Presspaketes anpasst. So eilen die mit der Gewebebahn beklebten Ecken des Presspaketes voraus und nehmen einen spitzen Winkel ein, während der Mittelbereich bogenförmig zurückbleibt. Die ständige Führung des Presspaketes in einem Spalt während seiner Schubverformung verhindert das Stabilitätsversagen.

Wenn das Presspaket vollständig in das Formwerkzeug eingezogen ist, wird der Pressstempel mit einer Presskraft von 300 kN in das Gesenk gedrückt. Das Presswerkzeug weist eine Temperatur von 105°C auf und bleibt geschlossen, bis der verwendete Klebstoff nach 5 Minuten ausgehärtet ist und der fertige Formteilrohling nach Öffnen des Formwerkzeuges entnommen werden kann.

Das Formteil wird nach dem Beschneiden und Verputzen als Verkleidungselement in Innenräumen verwendet.

### Ausführungsbeispiel 3 (Fig. 3 und 4):

2400 mm lange und 650 mm breite Streifen-3D-Flächenelemente aus 1,5 mm dickem Buchen-Furnier sind wie in Beispiel 1 und 2 beleimt und bezüglich der Holzfaserrichtung kreuzweise zu einem 5-lagigen, ca. 8 mm dicken Presspaket (13) zusammengelegt und kurz ebenflächig gepresst, wobei die Holzfaserrichtung der Decklagen parallel zur Längskante verläuft.
Das Presspaket wird in einen 8,5 mm hohen Kanal (14) mit einem Profilradius von 1050 mm analog Beispiel 1 und 2 gebracht, der jedoch in zwei Bereiche (14a; 14b) geteilt ist und im Mittelbereich des Presspaketes ca. 50 mm frei lässt.

Das Formwerkzeug (15) weist die Konturen eines einteiligen Freischwingersessels auf und ist jeweils in der Nähe eines Wendepunktes der Konturenkurve in Segmente geteilt. Der Querschnitt der Kontur ist ein Kreisbogen mit im Verlauf der Kontur stetig sich änderndem Radius von 900 mm bis auf 1200 mm. Das Presspaket wird nun mit dem nicht vom Kanal umschlossenen Teil tangential an das auf einer Grundplatte montierte konvexe Segment (16) angelegt und mit einem Hilfs-Spannbügel (17) angedrückt, um das Presspaket zu fixieren. Nun schwenkt ein Teil des Kanals um das Segment (16), gibt dabei den entsprechenden Bereich des Presspaketes frei und legt ihn auf das Segment ab, wobei das Presspaket im Kanal unter einer Druckspannung (p) steht, die beim Herausziehen (Freigeben) eine Reibkraft hervorruft. Bei diesem Schwenken des Presspaketes erfolgt dessen 3D-Schubverformung. Anschließend wird auf diesen Bereich das entsprechende konkave Gegensegment (18) aufgedrückt und verriegelt (19), wobei eine bisher ggf. noch nicht 100%ige formtreue Verformung vervollständigt wird. Im nächsten Schritt wird das anschließende konvexe Segment (20) auf der Grundplatte befestigt, der Kanal darüber geschwenkt und das entsprechende konkave Gegensegment (21) zur Fixierung des zweiten Presspaketbereiches aufgedrückt. Auf diese Weise wird das gesamte Presspaket mit beiden Kanalbereichen geformt und fixiert.

Während des Schwenkens und Freigebens des Presspaketes übt der Kanal eine durch die Gleitreibung hervorgerufene Zugkraft (22) in Längsrichtung auf das Presspaket aus, wodurch ein bei der 3D-Schubverformung zu befiirchtendes Stabilitätsversagen des in begrenzter Länge freiliegenden Bereiches des Presspaketes unterbunden wird. Die nur grob annähernde Übereinstimmung des konstanten Profils des Kanals mit dem sich vom Radius R = 900 mm auf Radius R = 750 mm änderndem Querschnitt der Formwerkzeugkontur wird durch die stabilisierende Wirkung der Zugkraft ebenfalls unterbunden. Der im Kanal befindliche Anteil des Presspaketes wird, wie in Beispiel 1 und 2, durch die Spaltführung stabilisiert.

Das fertig geformte Presspaket mit angelegten und verriegelten Presssegmenten wird nun in eine hydraulische Presse gefahren und in beiden Ebenen mit einer Presskraft (23) von je 1200 kN beaufschlagt. Die Beheizung der Presssegmente erfolgt durch Anlegen eines Hochfrequenz-Wechselfeldes.

Das Formteil bildet nach dem Beschneiden und Verputzen einen einteiligen Freischwinger-Sessel.

### Ausführungsbeispiel 4 (Fig. 8, 8a, 9, 9a):

Ein 1,2 mm dickes Streifen-3D-Flächenelement (28), bestehend aus einer 0,6 mm dicken Lage Nussbaumfurnier (28a) und einer darunter geklebten Lage Buchenfurnier minderer Qualität (28b), einer Länge von 500 mm und einer Breite von 120 mm wird in einen 1,4 mm hohen, ebenflächigen Kanal gebracht und durch im Kanal wirkende, seitlich angreifende Druckelemente in der Fläche konzentrisch-kreisbogenförmig verzogen.

Über eine gerade Aussparung in einer Kanalplatte wird der am Rand konkav verzogene Anteil des 3D-Flächenelementes (29) in gerader Linie abgeschnitten, das verbleibende 3D-Flächenelement an diesem Rand mit einem üblichen Schmelzfaden (30) beiderseitig abgeklebt und damit gegen das Rückverformen des Verzuges gesichert. Der gegenüberliegende Rand des verzogenen 3D-Flächenelementes ist nun kreisbogenförmig.

Zwei dieser Flächenelemente werden nun mit dem gerade geschnittenen Rand an ein einfaches, rechteckiges 3D-Flächenelement der Länge 500 mm und der Breite 260 mm angefügt und mittels quer verlaufender Schmelzfäden (31) gesichert, so dass ein flächig vorgeformtes 3D-Flächenelement (32) mit den Scheitelabmessungen 500 mm x 500 mm entsteht (Fig. 9).

Zusammen mit 9 weiteren, wie beschrieben vorgeformten Flächenelementen, die jedoch aus preiswerterem Rotbuchenfurnier bestehen, erfolgt die Verarbeitung zu einem Formteil (Figur 9) analog Beispiel 1, wobei der wesentliche Unterschied im Aufbau des Formwerkzeuges besteht.

Das Gesenk weist eine Radius von 150 mm und eine Höhe von 165 mm auf, d. h., das Gesenk ist leicht hinterschnitten. Demzufolge ist der Pressstempel in mehrere, den Umfang verkleinerbare Segmente geteilt. Diese Umfangsverkleinerung um 4 mm ist auch notwendig, um während des Einbringens des Presspaketes einen passierbaren Kanal zu bilden.

Die Umformung von einfachen 3D-Flächenelementen wäre in einem derartig geformten Werkzeug auf Grund geometrischer und werkstoffbedingter Grenzen nicht mehr möglich. Durch die Vorwegnahme des Flächenverzuges in die Gegenrichtung in den betreffenden Bereichen ist jedoch eine solche Verformung ohne Schäden am Flächenelement erreichbar (siehe Ansprüche 2 und 3).

Das entstandene Formteil wird halbkugelförmig beschnitten, mit Bohrungen versehen und verputzt. Es ist Bestandteil eines kugelförmigen Lautsprechergehäuses (Fig. 9b).

### Ausführungsbeispiel 5 (Fig. 10 und 11):

Ein zu einem Coil aufgewickeltes, endloses 3D-Flächenelement (33) aus 0,6 mm dickem, in Streifen geschnittenes Buche-Furnier mit einer Breite von 40 mm, welches als Zwischenlage einen 45 mm breiten, endlosen Papierstreifen enthält, wird in einer Länge von 1280 mm abgerollt. Dabei läuft das 3D-Flächenelement mittels mitlaufender Transportbänder (34) in einen 0,75 mm hohen und 42 mm breiten Kanal (35), zuvor wird die Papierzwischenlage weggeleitet. Der Kanal sichert die flächige Gestalt des 3D-Flächenelementes, ohne dass die einzelnen Streifen ungeordnet verlaufen können. Die abgerollte und im Kanal befindliche Länge des 3D-Elementes wird nun vom Coil abgetrennt und in dem Kanal weitertransportiert, bis der Anfang 15 mm weit aus dem Kanal, der am Ende in ein bogenförmiges Profil (36) mit einem Radius von 12 mm übergeht, hervorsteht.

Eine 25 mm dicke MDF-Platte (37), welche eine halbellipsenförmige Kontur mit einem Umfang von 1240 mm, im halbellipsenformigen Bereich ein Halbrundprofil (38) von 23 mm Durchmesser und im Übergangsbereich einen Falz von 0,6 mm (39) bzw. 1,4 mm Tiefe (40) aufweist, wird im gesamten Profilbereich mit einem für die Furnierkantenbeschichtung üblichen Schmelzklebstoff beschichtet. Unmittelbar darauf, d. h. im noch flüssigen Zustand des Schmelzklebstoffes, wird das aus dem Kanal hervorstehende 3D-Flächenelement an den Beginn der halbellipsenformigen Kontur der MDF-Platte angelegt, mittels eines am Kanal anschließenden Auflagestückes (41) und eines nachfolgenden Profilwalzenpaares (42) auf das Profil der MDF-Platte aufgedrückt und kontinuierlich weitergeführt, bis der gesamte Abschnitt des 3D-Flächenelementes auf das Profil der MDF-Platte aufgeklebt ist. Dabei legen sich die beiden längs verlaufenden Ränder des 3D-Flächenelementes in die Fälze. Im Bereich des 0,6 mm tiefen Falzes (spätere Gutseite des fertigen Bauelementes) entsteht ein stetiger Übergang (43) vom Halbrundprofil zur Plattenebene, während beim 1,4 mm tiefen Falz (später in Gebrauchslage nicht sichtbar) ein Absatz von 0,8 mm verbleibt. Die Höhe dieses Absatzes kann beim Auftreten von etwaigen Dickentoleranzen der MDF-Platte entsprechend variieren.

Das Anlegen des 3D-Flächenelementes an die Falzflächen garantiert ein dichtes Zusammendrücken des 3D-Flächenelementes während des Auftragens. Das beim üblichen Beschichten mit 2D-Kantenfurnieren erforderliche Abfräsen des Überstandes entfällt, außerdem kann das Beschichtungsmaterial (3D-Flächen-element) in der Breite zu 100% ausgenutzt werden. Der stetige Übergang von beschichtetem Profil zur Plattenebene ist ein Qualitätsmerkmal, was sonst nur bei massiven, aus dem Vollquerschnitt gefrästen Kantenmaterialien möglich ist.

Das fertige, noch verputzte und lackierte Bauelement dient als Tischplatte.

### Ausführungsbeispiel 6 (Figur 12 und 13):

Streifen-3D-Flächenelemente (44) mit einer Länge von 500 mm, der Breite von 80 mm und der Dicke von 0,8 mm sind zu 20 Stück und einer jeweils trennenden Papierlage in einem das Flächenelementen-Paket umhüllenden Magazin (45) aus Karton gelagert. Das Paket wird innerhalb des Magazins von leichten Druckfedern (46) zusammengehalten, die an dem obersten 3D-Flächenelement angreifen. Am untersten Flächenelement weist das Magazin an einer Stirnkante eine durch ein Plast-Element verstärkte, düsenartige Öffnung (47) auf, die den Querschnitt eines Flächenelementes aufnehmen kann. Am gegenüberliegenden Ende in Längsrichtung hat das Magazin eine Aussparung (48), durch die man das unterste Flächenelement um ca. 20 mm durch die Düse vorschieben kann.

Ein als einteiliges Formwerkzeug dienendes Gipsformteil (49) ist mit gering wirkendem Haftklebstoff beschichtet. Diese Formfläche wird nun mit einem 3D-Flächenelement belegt, indem es mit dem 20 mm aus dem Magazin hervorstehenden Rand an den Rand des Formwerkzeuges angelegt, dort mittels Klebeband (50) fixiert und dann unter ständigem manuellen Andrücken (51) über den gesamten Scheitelbereich des Formwerkzeuges gezogen und am gegenüberliegenden Rand wiederum fixiert wird. Die Düse des Magazins wird dabei dicht an der fortschreitenden Auflagestelle entlang geführt. Während des Auflegens des 3D-Flächenelementes findet dessen Flächenverzug statt, der bis in das als Stützkanal wirkende Magazin hineinreicht.

Das 3D-Flächenelement wird zum Schluss vollkommen aus dem Magazin gezogen. Anschließend wird das nächste 3D-Flächenelement in gleicher Weise dicht neben dem ersten aufgelegt. Wenn die gesamte Formwerkzeugfläche so überzogen ist, wird die Fläche mit einem langsam härtenden, hochviskosen PUR-Klebstoff bestrichen und danach wie beschrieben quer zur ersten Holzfaserrichtung mit einer zweiten Lage von 3D-Flächenelementen beschichtet. Nun wird das Formwerkzeug in einen Vakuumsack gebracht, wobei die aufgelegten Lagen unter mäßiger Temperatur miteinander verklebt werden. Auf die gleiche Art werden noch weitere fünf Lagen aufgelegt und aufgeklebt. Schließlich wird der fertige, nun ca. 5 mm dicke Formteil-Rohling vom Formwerkzeug abgelöst und besäumt sowie verputzt.

Der Vorteil dieser Verfahrensvariante liegt in den sehr einfachen Vorrichtungen, die es erlauben, auch komplizierte und großvolumige Prototypen ohne aufwendige Press- und Formungswerkzeuge zu erstellen. Ebenso sind manuelle 3D-Furniebeschichtungen möglich.

Das beschriebene Prototyp-Formteil wird als Stuhlschale benutzt.

### Ausführungsbeispiel 7 (Fig. 14 - 18):

Ein Möbel-Türenrohling mit einem Format von 500 mm x 600 mm, bestehend aus einer 20 mm dicken, mit einer UF-Leim beschichtete MDF-Platte (52), im Profil und in der Kontur gemäß Fig. 14 gerundet, wird mit einem 0,5mm dicken Streifen-3D-Flächenelement (53) aus Kirschbaumfurnier beschichtet. Dieses 3D-Flächenelement wurde zuvor an den ca. 30 mm breiten Längs-Randstreifen (54) über eine Länge von jeweils ca. 50 mm, von der Ecke aus gemessen, gemäß Beispiel 6 verzogen.

Der Türenrohling wird auf eine zur Membranpresse gehörende, in der Höhe verschiebbare Unterlage (55) gelegt und in die tiefste Stellung gebracht. So liegt die obere, ebene Fläche des Türenrohlings in gleicher Höhe wie der geöffnete Formungsrahmen (56) für das 3D-Flächenelement. Nachdem das 3D-Flächen-element auf Türenrohling und Formungsrahmen aufgelegt wurde, wird der bewegliche Teil des Formungsrahmens geschlossen und bildet somit den während der 3D-Umformung stützenden Kanal (57). Dieser Kanal ist in seinem Querschnitt so ausgebildet, dass er bereits während des Schließens eine anteilige 3D-Verformung des 3D-Flächenelementes bewirkt. Anschließend wird die Press-Membran (58) aufgelegt und mit einem Druck (59) von zunächst 0,4 bar beaufschlagt. Nun beginnt sich der Türenrohling durch die pneumatisch angetriebene Unterlage anzuheben, wobei sich der Membran-Anpressdruck stetig erhöht. Während dieser Bewegung legt sich das 3D-Flächenelement, von der Membran auf den Türenrohling gedrückt, um die 3D-Türenfläche, wobei in den noch nicht aufgelegten Eckbereichen (60) eine durch den Formungsrahmen gestützte 3D-Umformung abläuft. Hat sich der Türenrohling um 22 mm angehoben, ist der Membrandruck auf 4 bar angewachsen und die Umformung ist beendet. Bei einer Temperatur von 90°C härtet der UF-Leim aus, und nach 3 Minuten kann der 3D-furnierbeschichtete Türenrohling entnommen werden. Die überstehenden Ränder der Beschichtung werden abgefräst und die Kanten verputzt.

## Patentansprüche

1. Verfahren zur Herstellung eines dreidimensional geformte, schalenförmigen Körpers (3D-Körpers) oder zur Beschichtung eines dreidimensional geformten Bauelementes mit dreidimensional biegeverformbaren Flächenelementen (3D-Flächenelementen) oder mit konventionellen biegeverformbaren Flächenelementen (2D-Flächenelementen) aus Holz oder Holzverbundwerkstoff,
wobei die umzuformenden 2D- oder 3D-Flächenelemente auf das Verarbeitungsmaß zugeschnittenen und für den Umformprozess positioniert oder in ihrer Lage zueinander fixiert
und die ein- oder mehrlagig angeordneten Flächenelemente abschnittsweise oder im Ganzen umgeformt werden,
wobei die Formänderung durch eine Schubverformung in der Fläche aller beteiligten Flächenelemente und einer gleichzeitigen mehrachsigen Biegeverformung der Flächenelemente im Bereich der aktiven Umformzone bewirkt wird,
und das Flächenelemente/die Flächenelemente in einer Zwangsführung verschoben werden zur Erzeugung einer in der Umformzone wirkenden Gegenspannung, durch die ein Ausbauchen, Knicken oder Falten des Flächenelementes in der Umformzone unterdrückt wird,
wobei die Gegenspannung eine Verformung des umzuformenden Flächenelementes durch die verfahrensnotwendige Verschiebung innerhalb der ein- oder mehrschichtigen 2D- oder 3D-Flächenelemente zulässt und zugleich ein Stabilitätsversagen der umzuformenden 2D- oder 3D-Flächenelemente während des Umformprozesses verhindert,
und dass nach Erreichen des gewünschten Umformgrades die elastisch oder elastischplastisch verformten Flächenelemente mit Druck beaufschlagt werden, bis die Flächenelemente unter Einwirkung eines Klebstoffs miteinander oder die Streifen innerhalb eines Flächenelementes untereinander oder mit dem sie tragenden Bauelement verbunden sind.

2. Verfahren nach Anspruch 1, **dadurch gekennzeichnet, dass** die zu erwartende Schubverformung in der Fläche vor r der mehrachsigen Biegeverformung in deren Gegenrichtung vorgenommen wird (Schubvorformung), um während der anschließenden mehrachsigen Biegeverformung zunächst eine Rückverformung und nachfolgend eine geringere Biegeverformung in der Fläche zu bewirken.

3. Verfahren nach Anspruch 2, **dadurch gekennzeichnet, dass** schubvorgeformte Flächenelemente miteinander oder mit nicht schubvorgeformten Flächenelementen zu einer Fläche zusammengefügt werden, nachdem geeignete Fügekanten geschaffen wurden.

4. Verfahren nach einem der Ansprüche 1 bis 3, **dadurch gekennzeichnet, dass** als 2D-oder 3D-Flächenelemente Halbzeuge aus Holz, geschichtetem Holz oder einem Verbund aus Holz und/oder geschichtetem Holz und verformbaren Flächenmaterialien verwendet werden.

5. Verfahren nach Anspruch 4, **dadurch gekennzeichnet, dass** als verformbare Flächenmaterialien Kunststofffolie, Vlies oder Aluminiumfolie verwendet werden.

6. Verfahren nach einem der Ansprüche 1 bis 5, **dadurch gekennzeichnet, dass** die Umformung des Flächenelementes bei Temperaturen zwischen 20°C und 30°C erfolgt.

7. Verfahren nach einem der Ansprüche 1 bis 6, **dadurch gekennzeichnet, dass** die Flächenelemente nach der Umformung mit einem Pressdruck von 0,06 MPa bis 3 MPa beaufschlagt und auf Reaktionstemperatur des Klebstoffes erwärmt werden.

8. Verfahren nach einem der Ansprüche 1 bis 7, **dadurch gekennzeichnet, dass** die Flächenelemente vor der Umformung auf eine Reaktionstemperatur von etwa 30°C ... 180°C erwärmt werden.

9. Verfahren nach einem der Ansprüche 1 bis 8, **dadurch gekennzeichnet, dass** der 3D-Verformung eine 2D-Vorformung der umzuformenden Bereiche oder aller Flächenelemente vorgeschaltet ist, um die Kontur des 2D-verformten Flächenelementes an die Gestalt des nachfolgenden Formwerkzeuges anzupassen.

10. Vorrichtung zur Herstellung eines dreidimensional geformten, schalenförmigen Körpers (3D-Körpers) nach einem der Ansprüche 1 bis 3 oder 9, **dadurch gekennzeichnet, dass** eine Zwangsführung mit einem 3D-Formwerkzeug oder Bauteil einer Formungseinrichtung in Wirkverbindung steht, wobei die umzuformenden Flächenelemente in der Zwangsführung aufnehmbar sind, mit der die verfahrensspezifischen Gegenspannungen erzeugt werden.

11. Vorrichtung nach Anspruch 10, **dadurch gekennzeichnet, dass** die Zwangsführung kanalartig ausgebildet ist.

12. Vorrichtung nach Anspruch 11, **dadurch gekennzeichnet, dass** die kanalartige Zwangsführung aus einem ebenflächigen oder bogenförmigen, starren Plattenpaar besteht, das die Flächenelemente im Wesentlichen umschließt und einen solchen Spalt bildet, dass die Flächenelemente unter Einwirkung der Umformspannungen darin verschoben werden können, ohne jedoch auszuknicken oder sich übereinander zuschieben.

13. Vorrichtung nach einem der Ansprüche 10 bis 12 zur Herstellung eines dreidimensional geformten, schalenförmigen Körpers (3D-Körpers) nach einem der Ansprüche 1 bis 3, **dadurch gekennzeichnet, dass** die Zwangsführung mit einem Formwerkzeug in Wirkverbindung steht, in dem die endgültige Formgebung und Fixierung erfolgt.

14. Vorrichtung nach Anspruch 11, **dadurch gekennzeichnet, dass** das Formwerkzeug zum Verpressen der Flächenelemente (Presspaket) als Gesenkwerkzeug ausgestaltet und die Pressflächen von Gesenk und Stempel so geformt sind, dass sie zumindest zeitweise kanalartig ausgebildet sind.

15. Vorrichtung nach Anspruch 13 oder 14, **dadurch gekennzeichnet, dass** die Übergabe der Flächenelemente (Presspaket) von der Zwangsführung zum Formwerkzeug durch ein stößelartiges Element erfolgt.

16. Vorrichtung nach Anspruch 13 oder 14, **dadurch gekennzeichnet, dass** die Übergabe der Flächenelemente (Presspaket) von der Zwangsführung zum Formwerkzeug durch Zugkräfte erfolgt, die auf ein am Presspaket befestigtes, flexibles Element wirken.

17. Vorrichtung nach Anspruch 13 oder 14, **dadurch gekennzeichnet, dass** die Übergabe der Flächenelemente (Presspaket) von der Zwangsführung zum Formwerkzeug durch ein Hilfs-Flächenelementes zum tablettartigen Einschieben oder Einziehen erfolgt.

18. Vorrichtung nach Anspruch 13 oder 14, **dadurch gekennzeichnet, dass** die Übergabe der Flächenelemente (Presspaket) von der Zwangsführung zum Formwerkzeug durch Einblasen mittels gerichtetem Luftpolster erfolgt.

19. Vorrichtung nach Anspruch 13 oder 14, **dadurch gekennzeichnet, dass** die Übergabe der Flächenelemente (Presspaket) von der Zwangsführung zum Formwerkzeug durch rhythmische Relativbewegung zwischen Plattenpaar der Zwangsführung und Formwerkzeug erfolgt.

20. Vorrichtung nach Anspruch 19, **dadurch gekennzeichnet, dass** die rhythmische Relativbewegung zwischen Plattenpaar der Zwangsführung und Formwerkzeug durch einen Schwingförderer erzeugt wird.

21. Vorrichtung nach Anspruch 13, **dadurch gekennzeichnet, dass** das kanalartige Formwerkzeug vollständig oder abschnittsweise verschließbar ist.

22. Vorrichtung nach Anspruch 19, **dadurch gekennzeichnet, dass** das abschnittweise verschließbare, kanalartige Formwerkzeug von einem Plattenpaar gebildet wird, dessen Austrittsrand dem sich verändernden Profil des Formwerkzeuges entspricht.

23. Vorrichtung nach Anspruch 11 oder 21, **dadurch gekennzeichnet, dass** der Querschnitt des Austrittsendes (Mundstück) der kanalartigen Zwangsführung oder des kanalartigen Formwerkzeuges veränderbar ist.

24. Vorrichtung nach Anspruch 10, **dadurch gekennzeichnet, dass** die umzuformenden Flächenelemente (Presspaket) in der Zwangsführung aufnehmbar sind, die eine selektive Freigabe des Presspaketes ermöglicht, so dass der freiliegende Bereich an ein offenes Formwerkzeug angelegt und mittels eines Presswerkzeuges an das Formwerkzeug gedrückt wird.

25. Vorrichtung nach Anspruch 24, **dadurch gekennzeichnet, dass** das Presswerkzeug segmentiert ist.

26. Vorrichtung nach Anspruch 13, **dadurch gekennzeichnet, dass** das Formwerkzeug für den ersten Umformschritt als flaches, aus Gesenk und Stempel bestehendes Formwerkzeug ausgebildet ist.

27. Vorrichtung nach Anspruch 13, **dadurch gekennzeichnet, dass** das Formwerkzeug für die Umformung eines stark 3D-verformten Werkstückes oder Halbzeuges als Folgeschritt-Formwerkzeug ausgebildet ist.

28. Vorrichtung nach Anspruch 10, **dadurch gekennzeichnet, dass** die Zwangsführung aus parallel zueinander laufenden Transportbändern besteht, in denen sich die Flächenelemente unter Einwirkung der Umformspannungen verschieben.

29. Vorrichtung nach Anspruch 13, **dadurch gekennzeichnet, dass** als Formwerkzeug zum Beschichten eines profilartigen 3D-Bauelementes ein kontinuierlich wirkendes Werkzeug verwendet wird.

30. Vorrichtung nach Anspruch 13, **dadurch gekennzeichnet, dass** das Formwerkzeug zum Aufpressen von Flächenelementen biegeweich ist.

## Claims

1. Method for producing a three-dimensionally formed shell-like body (3D-body) or for coating a three-dimensionally formed component with three-dimensionally bend-formable surface elements (3D-surface elements) or with traditional bend-formable surface elements (2D-surface elements) made of wood or a wood composite material,
with the 2D- or 3D-surface elements to be formed cut to the process dimension and positioned for the forming process or in their positions fixed relative to each other, and the surface elements arranged in one layer or several layers are formed section by section or as a whole,
whereby the change of shape is caused by a shear strain developed in the surface of all surface elements involved and a simultaneously applied multi-axis bend deformation of the surface elements in the region of the active forming zone,
and the surface element is/the surface elements are shifted in a positive guide to generate a counterstress acting in the forming zone preventing the surface element from bulging, buckling or wrinkling in the forming zone,
the counterstress allowing the surface element to be formed to deform by the process-required shifting occurring within the one- or multi-ply 2D- or 3D-surface elements, at the same time preventing the stability of the 2D- or 3D-surface elements from failing during forming,
and that after the desired forming degree has been reached pressure is applied to the elastically or elastic-plastically formed surface elements until the action of an adhesive has made the surface elements connect to each other or the stripes within a surface element to each other or to the component carrying the surface elements.

2. Method to claim 1 **characterized by that** the shear strain expected in the surface is made before the multi-axis bend deformation in the direction opposed to the direction of said bend deformation (shear pre-strain) in order to cause during the subsequent multi-axis bend deformation, first, recovery and then, a smaller bend deformation in the surface.

3. Method to claim 2 **characterized by that** shear pre-strained surface elements are joined together with each other or with not shear pre-strained surface elements to form a surface, after suitable joining edges have been created.

4. Method to one of the claims 1 to 3 **characterized by that** as 2D- or 3D-surface elements semi-manufactured products of wood, laminated wood or a composite of wood and/or laminated wood and formable surface materials are used.

5. Method to claim 4 **characterized by that** as formable surface materials plastic films, a non-woven web or aluminium foils are used.

6. Method to one of the claims 1 to 5 **characterized by that** forming of the surface element is carried out at temperatures between 20°C and 30°C.

7. Method to one of the claims 1 to 6 **characterized by that** after the forming process a pressure of 0.06 MPa to 3 MPa is applied to the surface elements, the surface elements being heated to the reaction temperature of the adhesive.

8. Method to one of the claims 1 to 7 **characterized by that** the before the forming process the surface elements are heated to a reaction temperature of approx. 30°C ... 180°C.

9. Method to one of the claims 1 to 8 **characterized by that** a 2D-preforming of the regions to be changed in shape or of all surface elements is carried out before the 3D-forming in order to adapt the contour of the 2D-formed surface element to the shape of the following forming tool.

10. Method for producing a three-dimensionally formed shell-like body (3D-body) to one of the claims 1 to 3 or 9 **characterized by that** a positive guide is in functional connection to a 3D-forming tool or component of a forming device, the surface elements to be changed in shape being attachable in the positive guide used for creating the process-specific counterstresses.

11. Method to claim 10 **characterized by that** the positive guide is established channel-like.

12. Method to claim 11 **characterized by that** the channel-like positive guide consists of a planar or arcuate rigid pair of plates that essentially enclose the surface elements forming a gap so that the surface elements can be shifted within said gap under the action of the forming stresses without buckling or sliding over each other.

13. Method to one of the claims 10 to 12 for producing a three-dimensionally formed shell-like body (3D-body) to one of the claims 1 to 3 **characterized by that** the positive guide is in functional connection to a forming tool wherein final forming and fixation are performed.

14. Method to claim 11 **characterized by that** the forming tool for pressing the surface elements (pressing packet) is established as die tool, the pressing surfaces of the die and punch are shaped such that they are, at least temporarily, established channel-like.

15. Method to claim 13 or 14 **characterized by that** the transfer of the surface elements (pressing packet) from the positive guide to the forming tool is realized by a ram-like member.

16. Method to claim 13 or 14 **characterized by that** the transfer of the surface elements (pressing packet) from the positive guide to the forming tool is realized by pulling forces acting on a flexible element attached to the pressing packet.

17. Method to claim 13 or 14 **characterized by that** the transfer of the surface elements (pressing packet) from the positive guide to the forming tool is realized by an auxiliary surface element for tray-like pushing or pulling in.

18. Method to claim 13 or 14 **characterized by that** the transfer of the surface elements (pressing packet) from the positive guide to the forming tool is realized by blowing in using a directed air buffer.

19. Method to claim 13 or 14 **characterized by that** the transfer of the surface elements (pressing packet) from the positive guide to the forming tool is realized by a rhythmical relative movement between the pair of plates of the positive guide and the forming tool.

20. Method to claim 19 **characterized by that** the rhythmical relative movement between the pair of plates of the positive guide and the forming tool is created by a vibrating conveyor.

21. Method to claim 13 **characterized by that** the channel-like forming tool is established closable completely or section by section.

22. Method to claim 19 **characterized by that** the channel-like forming tool closable section by section is established as a pair of plates with the exit edge of the pair of plates corresponding to the changing profile of the forming tool.

23. Method to claim 11 or 21 **characterized by that** the cross-section of the exit end (mouthpiece) of the channel-like positive guide or the channel-like forming tool can be varied.

24. Method to claim 10 **characterized by that** the surface elements (pressing packet) to be formed are placeable in the positive guide, whereby the positive guide enables to selectively release the pressing packet so that the free region can be put against an open forming tool, pressed against the forming tool by means of a pressing tool.

25. Method to claim 24 **characterized by that** the pressing tool is segmented.

26. Method to claim 13 **characterized by that** the forming tool for the first forming step is established to be a flat forming tool comprising die and punch.

27. Method to claim 13 **characterized by that** the forming tool for forming a highly 3D-formed workpiece or semi-manufactured product is established to be a progressive forming tool.

28. Method to claim 10 **characterized by that** the positive guide consists of parallel running conveyor belts wherein the surface elements slide due to the forming stresses.

29. Method to claim 13 **characterized by that** as forming tool for coating a profile-like 3D-component, a continuously functioning tool is used.

30. Method to claim 13 **characterized by that** the forming tool for the pressing on of surface elements is bend-flexible.

## Revendications

1. Procédé pour fabriquer un corps en forme de cuvette formé en trois dimensions (corps 3D) ou pour revêtir un élément de construction formé en trois dimensions avec des éléments de surface déformables en flexion dans les trois dimensions (éléments de surface 3D) ou avec des éléments de surface déformables en flexion conventionnels (éléments de surface 2D) en bois ou dans un matériau composite à base de bois,
selon lequel les éléments de surface 2D ou 3D sont coupés à la dimension de mise en oeuvre et positionnés pour le processus de mise en forme ou fixés dans leur position mutuelle
et les éléments de surface disposés en une ou plusieurs couches sont mis en forme par portions ou dans leur ensemble,
selon lequel le changement de forme est provoqué par une déformation par cisaillement dans la surface de tous les éléments de surface impliqués et une déformation par flexion multiaxiale simultanée des éléments de surface dans la région de la zone active de mise en forme,
et le ou les élément(s) de surface sont déplacés dans un guidage forcé pour générer une contrainte opposée agissant dans la zone de mise en forme, au moyen de laquelle un bombement, un flambage ou un pliage de l'élément de surface dans la zone de mise en forme est empêché,
selon lequel la contrainte opposée autorise une déformation de l'élément de surface à mettre en forme par le déplacement nécessaire au procédé à l'intérieur des éléments de surface 2D ou 3D mono- ou multicouches et empêche en même temps une défaillance de stabilité des éléments de surface 2D ou 3D à mettre en forme pendant le processus de mise en forme,
et qu'après atteinte du degré de mise en forme souhaité, les éléments de surface déformés élastiquement ou élasto-plastiquement sont soumis à une pression jusqu'à ce que les éléments de surface soient solidarisés entre eux sous l'action d'une colle ou les bandes à l'intérieur d'un élément de surface solidarisées entre elles ou avec l'élément de construction qui les porte.

2. Procédé selon la revendication 1, **caractérisé en ce que** la déformation par cisaillement à attendre dans la surface est effectuée avant la déformation par flexion multiaxiale et en sens contraire à celle-ci (préformage par cisaillement) pour, pendant la déformation par flexion multiaxiale consécutive, provoquer d'abord une remise en forme et ensuite une plus faible déformation par flexion dans la surface.

3. Procédé selon la revendication 2, **caractérisé en ce que** des éléments de surface préformés par cisaillement sont assemblés entre eux ou avec des éléments de surface non préformés par cisaillement pour former une surface après que des arêtes de jonction appropriées ont été créées.

4. Procédé selon l'une des revendications 1 à 3, **caractérisé en ce que** l'on utilise comme éléments de surface 2D ou 3D des semi-produits en bois, en bois stratifié ou en composé de bois et/ou de bois stratifié et de matériaux de surface déformables.

5. Procédé selon la revendication 4, **caractérisé en ce que** l'on utilise comme matériaux de surface déformables un film en matière plastique, du non-tissé ou une feuille d'aluminium.

6. Procédé selon l'une des revendications 1 à 5, **caractérisé en ce que** la mise en forme des éléments de surface est réalisée à des températures comprises entre 20 °C et 30 °C.

7. Procédé selon l'une des revendications 1 à 6, **caractérisé en ce qu'**après la mis en forme, les éléments de surface sont soumis à une pression d'application de 0,06 MPa à 3 MPa et chauffés à la température de réaction de la colle.

8. Procédé selon l'une des revendications 1 à 7, **caractérisé en ce qu'**avant la mise en forme, les éléments de surface sont chauffés à une température de réaction d'environ 30 °C à 180 °C.

9. Procédé selon l'une des revendications 1 à 8, **caractérisé en ce que** la déformation 3D est précédée par un préformage 2D des régions à mettre en forme ou de tous les éléments de surface, pour adapter le contour de l'élément de surface déformé en 2D à la forme de l'outil de formage suivant.

10. Dispositif pour fabriquer un corps en forme de cuvette formé en trois dimensions (corps 3D) selon l'une des revendications 1 à 3 ou 9, **caractérisé en ce qu'**un guidage forcé est en liaison active avec un outil de formage 3D ou un élément de construction d'un dispositif de formage, les éléments de surface à mettre en forme pouvant être reçus dans le guidage forcé avec lequel les contraintes opposées spécifiques au procédé sont générées.

11. Dispositif selon la revendication 10, **caractérisé en ce que** le guidage forcé est réalisé en forme de canal.

12. Dispositif selon la revendication 11, **caractérisé en ce que** le guidage forcé en forme de canal est constitué d'une paire de plaques rigides planes ou arquées qui entoure essentiellement les éléments de surface et forme une fente telle que les éléments de surface puissent y être déplacés sous l'action des contraintes de mise en forme sans toutefois flamber ou se pousser l'un sur l'autre.

13. Dispositif selon l'une des revendications 10 à 12 pour fabriquer un corps en forme de cuvette formé en trois dimensions (corps 3D) selon l'une des revendications 1 à 3, **caractérisé en ce que** le guidage forcé est en liaison active avec un outil de formage dans lequel sont effectuées la mise en forme et la fixation finales.

14. Dispositif selon la revendication 11**, caractérisé en ce que** l'outil de formage pour assembler par pressage les éléments de surface (paquet de pressage) est réalisé sous forme d'outil de matriçage et les surface de pressage de la matrice et du piston sont formées de manière à être réalisées au moins temporairement en forme de canal.

15. Dispositif selon la revendication 13 ou 14, **caractérisé en ce que** le transfert des éléments de surface (paquet de pressage) du guidage forcé à l'outil de formage est réalisé par un élément du genre poussoir.

16. Dispositif selon la revendication 13 ou 14, **caractérisé en ce que** le transfert des éléments de surface (paquet de pressage) du guidage forcé à l'outil de formage est réalisé par des forces de traction qui agissent sur un élément flexible fixé au paquet de pressage.

17. Dispositif selon la revendication 13 ou 14, **caractérisé en ce que** le transfert des éléments de surface (paquet de pressage) du guidage forcé à l'outil de formage est réalisé par un élément de surface auxiliaire pour l'insertion ou l'introduction à la manière d'un plateau.

18. Dispositif selon la revendication 13 ou 14, **caractérisé en ce que** le transfert des éléments de surface (paquet de pressage) du guidage forcé à l'outil de formage est réalisé par insufflation au moyen d'un coussin d'air dirigé.

19. Dispositif selon la revendication 13 ou 14, **caractérisé en ce que** le transfert des éléments de surface (paquet de pressage) du guidage forcé à l'outil de formage est réalisé par déplacement relatif rythmique entre la paire de plaques du guidage forcé et l'outil de formage.

20. Dispositif selon la revendication 19, **caractérisé en ce que** le déplacement relatif rythmique entre la paire de plaques du guidage forcé et l'outil de formage est généré par un convoyeur oscillant.

21. Dispositif selon la revendication 13, **caractérisé en ce que** l'outil de formage en forme de canal peut être fermé complètement ou par portions.

22. Dispositif selon la revendication 19, **caractérisé en ce que** l'outil de formage en forme de canal pouvant être fermé par portions est formé par une paire de plaques dont le bord de sortie correspond au profil variable de l'outil de formage.

23. Dispositif selon la revendication 11 ou 21, **caractérisé en ce que** la section de l'extrémité de sortie (embouchure) du guidage forcé en forme de canal ou de l'outil de formage en forme de canal est variable.

24. Dispositif selon la revendication 10, **caractérisé en ce que** les éléments de surface à mettre en forme (paquet de pressage) peuvent être reçus dans le guidage forcé qui permet une libération sélective du paquet de pressage, de sorte que la région libre est appliquée sur un outil de formage ouvert et pressé sur l'outil de formage au moyen d'un outil de pressage.

25. Dispositif selon la revendication 24, **caractérisé en ce que** l'outil de pressage est segmenté.

26. Dispositif selon la revendication 13, **caractérisé en ce que** l'outil de formage pour la première étape de mise en forme en conçu comme outil de formage plat constitué d'une matrice et d'un piston.

27. Dispositif selon la revendication 13, **caractérisé en ce que** l'outil de formage pour la mise en forme d'une pièce ou d'un semi-produit fortement déformé(e) en 3D est conçu comme outil pour étape de formage subséquente.

28. Dispositif selon la revendication 10, **caractérisé en ce que** le guidage forcé est constitué de bandes de transport se déplaçant parallèlement l'une à l'autre, dans lesquelles les éléments de surface se déplacent sous l'effet des contraintes de mise en forme.

29. Dispositif selon la revendication 13, **caractérisé en ce que** l'on utilise un outil à action continue comme outil de formage pour revêtir un élément de construction 3D du genre profilé.

30. Dispositif selon la revendication 13, **caractérisé en ce que** l'outil de formage pour le pressage d'éléments de surface est souple en flexion.
